# FASCICULE DE BREVET EUROPEEN

(11) **EP 2 213 904 B1**
(45) Date de publication et mention de la délivrance du brevet: **01.11.2017**
(21) Numéro de dépôt: 10447005.9
(22) Date de dépôt: 01.02.2010
(51) Int. Cl.: F16G 3/10

(54) **Procédé pour l'installation et la désinstallation d'une bande transporteuse**
Verfahren zur Installierung und Deinstallierung eines Transportbands
Method to install and uninstall a conveyor belt

(30) Priorité: 02.02.2009 BE 200900052
(43) Date de publication de la demande: 04.08.2010
(73) Titulaire: D&D Facilities, 9831 Deurle (BE)
(72) Inventeur: Hahn, André, 1501 Buizingen (BE)
(74) Mandataire: Gevers Patents

(56) Documents cités:
- EP-A1- 0 010 948
- WO-A-2006/066087
- DE-C- 548 694
- GB-A- 1 046 189
- US-A- 5 358 094
- US-A- 5 951 441
- US-A1- 2003 144 103

## Description

La présente invention se rapporte, d'une manière générale, à un procédé pour l'installation et la désinstallation d'une bande transporteuse sur des rouleaux d'entraînement.

En particulier, l'invention concerne un procédé pour l'installation et la désinstallation d'une bande transporteuse sur des rouleaux d'entraînement par l'intermédiaire d'une bande support sans fin tendue sur ces rouleaux d'entraînement, en particulier une bande transporteuse d'un comptoir caisse, en vue d'assurer un défilement de cette bande laquelle présente une face externe, une face interne et deux extrémités transversales libres.

L'installation d'une bande transporteuse au niveau d'un comptoir caisse, par exemple un comptoir caisse d'un supermarché ou de tout autre magasin, nécessite, généralement, diverses manipulations, notamment l'ouverture du comptoir et le démontage de divers accessoires, avant d'accéder librement aux rouleaux destinés à supporter et à entraîner la bande qui doit y être posée et tendue. Habituellement l'ensemble de toutes les opérations nécessaires à cette fin depuis l'ouverture jusqu'à la fermeture du comptoir requiert de 40 à 120 minutes. Comme la durée de vie opérationnelle d'une bande transporteuse de comptoir caisse n'excède pas 6 mois d'utilisation, il apparaît primordial de réduire au maximum le temps nécessaire à la désinstallation d'une bande usagée et à son remplacement par une bande neuve de façon à diminuer la durée de l'interruption d'usage du comptoir caisse et minimiser d'autant les désagréments ainsi occasionnés au personnel.

On a décrit, dans la demande de brevet WO 2006/066087, une méthode pour l'installation sur une bande support, d'un revêtement en un tissu imprimable et extensible et ce, par l'intermédiaire d'un moyen de fixation appliqué le long des bords longitudinaux et transversaux de ce revêtement. La surface imprimable de celui-ci peut être recouverte d'un film protecteur transparent de polyuréthane.

D'autre part, on a divulgué dans le brevet US5358094 une courroie support formée de multicouches flexibles de tissu et de caoutchouc sur laquelle est fixée une bande de recouvrement imprimable en vinyle, polyester, polypropylène ou polyéthylène. Cette fixation est réalisée par attraction électrostatique sur la surface totale de la bande et complétée par un matériau adhésif double face appliqué le long des bords longitudinaux et transversaux de cette bande.

La présente invention a pour but de proposer un procédé, du type indiqué précédemment, capable à la fois de pallier les inconvénients ci-dessus en ce qu'il permet d'effectuer une installation et une désinstallation d'une bande transporteuse de manière significativement plus rapide et plus simple que selon les procédés antérieurs rapportés précédemment.

Pour atteindre ce but, le procédé selon l'invention est caractérisé en ce que :
a) pour réaliser l'installation de ladite bande transporteuse, qui comprend une feuille support dont une face comporte un revêtement de polyuréthane porteur d'une image imprimée lequel est recouvert d'un mélange de matériaux protecteurs de cette image, on détermine une portion de cette bande transporteuse à chacune de ses deux extrémités transversales, la longueur de chacune de ces portions à fixer étant au maximum de 50 mm et la largeur de ces portions équivalant à la largeur de la bande transporteuse, puis cette bande transporteuse étant posée longitudinalement et tendue sur ladite bande support et lesdites deux extrémités transversales étant amenées en juxtaposition, on solidarise entre elles lesdites deux portions de bande transporteuse par fixation ou non de celles-ci à la bande support,
b) pour réaliser la désinstallation, on désolidarise les portions de bande transporteuse et on élimine celle-ci.

Selon une autre caractéristique de l'invention, la solidarisation entre elles des deux portions de bande transporteuse est réalisée par application d'un matériau adhésif utilisé seul ou associé à une bandelette comportant une face interne et une face externe.

Dans le cadre de la présente invention, on entend par « face interne » une face tournée vers les rouleaux d'entraînement et par « face externe » une face non tournée vers les rouleaux d'entraînement, qu'il s'agisse d'une face de la bande transporteuse, de la bande support, de la bandelette ou d'une portion de celles-ci. En conséquence, la face externe de la bande transporteuse est déterminée par le revêtement constitué d'un mélange de matériaux protecteurs de l'image imprimée.

Le procédé selon l'invention peut être mis en oeuvre de différentes manières selon que le matériau adhésif est utilisé seul ou associé à une bandelette support de ce matériau. solidarisation entre elles des deux portions de bande transporteuse est réalisée par application de ce matériau adhésif sur la face interne de chacune des deux portions de bande transporteuse et/ou sur la face externe de la bande support, de manière à fixer lesdites deux portions de bande transporteuse à la bande support.

Toutefois, selon un mode de réalisation du procédé de l'invention dans lequel un matériau adhésif est utilisé en relation avec une bandelette support de ce matériau adhésif, la solidarisation entre elles des deux portions de bande transporteuse est réalisée par application de cette bandelette sur la bande support et sur la face interne de chacune de ces deux portions de bande transporteuse, cette bandelette qui chevauche ces deux portions ayant sa face interne et sa face externe recouvertes d'un matériau adhésif, de manière à fixer

Ainsi, selon un mode de réalisation de ce procédé, dans lequel un matériau adhésif est utilisé seul, la solidarisation entre elles des deux portions de bande transporteuse est réalisée par application de ce matériau adhésif sur la face interne de chacune des deux portions de bande transporteuse et/ou sur la face externe de la bande support, de manière à fixer lesdites deux portions de bande transporteuse à la bande support.

Toutefois, selon un mode de réalisation du procédé de l'invention dans lequel un matériau adhésif est utilisé en relation avec une bandelette support de ce matériau adhésif, la solidarisation entre elles des deux portions de bande transporteuse est réalisée par application de cette bandelette sur la bande support et sur la face interne de chacune de ces deux portions de bande transporteuse, cette bandelette qui chevauche ces deux portions ayant sa face interne et sa face externe recouvertes d'un matériau adhésif, de manière à fixer lesdites deux portions de bande transporteuse à la bande support.

En variante, et selon un autre mode de réalisation du procédé en question, la solidarisation entre elles des deux portions de bande transporteuse est réalisée par application d'une bandelette dont une première portion, qui comporte un matériau adhésif sur sa face interne et sur sa face externe, est disposée entre la face externe de la bande support et la face interne de la bande transporteuse et une seconde portion, qui comporte un matériau adhésif sur sa face interne, est disposée sur la face externe de la bande transporteuse, de manière à fixer la première portion de bandelette à la bande support et à la bande transporteuse et la seconde portion de bandelette à la bande transporteuse.

Ces différents modes de réalisation nécessitent la fixation de la bande transporteuse à la bande support. Toutefois, la bande transporteuse peut être installée sur la bande support sans y être fixée, les deux portions d'extrémités transversales délimitées sur cette bande transporteuse étant solidarisées entre elles indépendamment de cette bande support. Lors du défilement de la bande transporteuse entraînée par la bande support disposée sur des rouleaux, on a observé que cette bande transporteuse ne glisse pas sur la bande support ou alors de manière imperceptible à l'oeil en ne compromettant en aucune manière le bon déroulement de cette opération.

En conséquence, selon un autre mode de réalisation du procédé de l'invention, la solidarisation entre elles des deux portions de bande transporteuse est réalisée par application, d'une première bandelette sur la face interne de chacune de ces portions de bande transporteuse, cette bandelette qui chevauche ces deux portions ayant l'une de ses faces recouverte d'un matériau adhésif et/ou par application d'une seconde bandelette sur la face externe de chacune de ces portions de bande transporteuse, cette bandelette qui chevauche ces deux portions ayant l'une de ses faces recouverte d'un matériau adhésif, de manière à fixer entre elles lesdites deux portions de bande transporteuse.

Dans ce mode de réalisation, la bandelette qui recouvre la face interne de chacune de ces portions et la bandelette qui recouvre la face externe de chacune de ces mêmes portions peuvent être de grandeurs identiques ou différentes. Lorsque ces grandeurs sont différentes, on préfère généralement que la bandelette la plus petite soit appliquée sur la face externe de chacune de ces portions de bande transporteuse.

En outre, selon un mode de réalisation supplémentaire du procédé de l'invention, la solidarisation entre elles des deux portions de bande transporteuse est réalisée par application d'une bandelette unique sur la face interne et sur la face externe de chacune de ces deux portions, cette bandelette unique, qui chevauche ces deux portions, ayant l'une de ses faces recouverte d'un matériau adhésif, de manière à fixer entre elles lesdites deux portions de bande transporteuses.

Selon une autre caractéristique de l'invention, chacune des portions délimitées sur la bande transporteuse est désolidarisée par décollage en particulier par chauffage.

La fixation des portions de bande transporteuse à la bande support est avantageusement réalisée au moyen d'un matériau capable de perdre son pouvoir adhésif sous l'effet de la chaleur et ce, afin de séparer, si nécessaire, la bande support d'avec la bande transporteuse en vue d'assurer une désinstallation de cette dernière.

D'autre part, ce matériau adhésif sera chimiquement neutre vis-à-vis des composants de la bande support et de la bande transporteuse avec lesquels il sera amené à entrer en contact.

Le matériau adhésif en question sera choisi, préférentiellement, parmi des colles qui répondent aux critères ci-dessus ou parmi des systèmes adhésifs. Ceux-ci comprennent, par exemple, une bandelette se présentant généralement sous la forme d'une feuille de matière naturelle ou synthétique, telle qu'une feuille de tissu ou de matière plastique, dont les faces sont recouvertes d'une matière adhésive.

Il a été observé, lors de l'élaboration de la présente invention, que le collage de la totalité de la face interne de la bande transporteuse sur la face externe de la bande support provoque, lors du défilement de ces deux bandes solidarisées, des tensions et étirements amenant des déformations de l'ensemble lorsqu'il passe sur les rouleaux d'entraînement. Un phénomène analogue a également été enregistré lorsque différentes portions de la bande transporteuse, réparties sur toute sa longueur, sont solidarisées par collage à la bande support.

Toutefois, il a été mis en évidence, dans le cadre de la présente invention, que ces phénomènes d'étirement, de tensions et autres déformations n'apparaissent pas si la fixation, notamment par adhérence de la bande transporteuse à la bande support, n'est opérée que sur une surface unique n'excédant pas certaines limites en l'occurrence une surface unique dont la longueur, déterminée selon l'axe longitudinal de la bande, est au maximum de 100 mm tandis que la largeur équivaut à la largeur de la bande en question.

Toutefois, cette surface unique peut être répartie en plusieurs portions juxtaposées, par exemple deux portions juxtaposées, chacune d'une longueur n'excédant pas 50 mm. De manière à maintenir un contact continu et uniforme de la bande transporteuse sur la bande support, ces deux portions juxtaposées constitueront chacune une portion terminale de cette bande. Par conséquent, lorsque cette bande transporteuse est posée et tendue sur la bande support, les deux extrémités étant juxtaposées, les deux portions de surface équivalent à une surface unique.

Ainsi, selon une caractéristique essentielle de l'invention, la longueur de chacune desdites portions à fixer est au maximum de 50 mm, de préférence environ 30 mm, la largeur de ces portions équivalant à la largeur de la bande transporteuse.

La bande support utilisée dans le cadre de la présente invention comprend habituellement une feuille support antistatique en matériau souple, par exemple une feuille en tissu ou en feutre tissé, capable de réduire le phénomène d'étirement ou plus généralement une feuille en un matériau présentant une grande résistance à la traction ainsi qu'une grande stabilité dimensionnelle ou de forme comme peuvent présenter certains polyesters. Cette feuille support est généralement revêtue d'une couche de matériau souple qui définit la face externe de la bande support. Il peut s'agir, par exemple d'un élastomère naturel ou synthétique comme le caoutchouc naturel ou synthétique ou d'un matériau polymérique thermoplastique tel que le chlorure de polyvinyle ou le polyuréthane.

Cette bande support, dont les extrémités sont rapprochées l'une de l'autre jusqu'à juxtaposition pour former une bande sans fin, est posée sur des rouleaux d'entraînement et tendue sur ceux-ci. Cette fixation est habituellement réalisée par tout moyen approprié, par exemple par agrafage ou thermosoudure haute fréquence.

Quant à la bande transporteuse, celle-ci est également composée, pour l'essentiel, d'une feuille support antistatique en un matériau souple telle qu'une feuille en tissu ou en feutre tissé capable de présenter une grande résistance à la traction, à l'abrasion et au vieillissement ainsi que de réduire le phénomène d'étirement. Habituellement, cette feuille aura les mêmes qualités que la feuille utilisée pour la bande support en ce qu'elle présentera une grande résistance à la traction et aux déformations tridimensionnelles. Il pourra s'agir par exemple d'une feuille en tissu antistatique, feutre tissé antistatique ou polyester.

Cette feuille est revêtue d'une couche de matériau souple qui définit la face externe de la bande transporteuse. Ce revêtement est obtenu à partir d'un élastomère naturel ou synthétique comme le caoutchouc naturel ou synthétique ou d'un matériau polymérique thermoplastique tel que le chlorure de polyvinyle ou le polyuréthane. Ce dernier constitue un matériau particulièrement préféré lorsque ce revêtement est prévu pour recevoir une impression d'images tel que décrit dans la demande de brevet EP 1 788 544. Dans ce cas, le polyuréthane destiné à recueillir cette impression sera, au départ, de préférence de couleur blanche, cette teinte provenant habituellement de colorants ou pigments intégrés directement dans la masse.

D'ordinaire, le revêtement de polyuréthane est obtenu par application de polymère pulvérulent sur la feuille support, chauffage jusqu'à liquéfaction et répartition uniforme sur celle-ci. Cette méthode présente toutefois le désavantage de produire une couche non homogène de polymère en raison de la présence de bulles d'air qui subsistent dans la masse ou qui s'introduisent au travers de la feuille support perméable. Ces bulles sont ainsi responsables de faiblesses au sein de cette couche se traduisant par l'apparition de craquelures suite au défilement de la bande transporteuse et notamment par suite de son transit sur les rouleaux d'entraînement.

Cependant, il a été mis en évidence, dans le cadre de la présente invention, que l'utilisation de polyuréthane sous forme de pâte déposée sur la feuille support de la bande transporteuse puis chauffée jusqu'à fluidification et répartie uniformément sur cette feuille support permet de pallier cet inconvénient et ainsi de prolonger la longévité de la bande transporteuse. Cette bande, après fabrication, présente une face externe visible parfaitement plane qui peut être utilisée telle quelle ou, de préférence, recouverte de zones de coloration pouvant mêler signes d'écriture et motifs graphiques décoratifs ou non qui correspondent, par exemple, à des marques, slogans, annonces publicitaires ou non ou encore informations quelconques portées à l'attention du public.

Habituellement, ces zones de colorations sont obtenues par impression selon le procédé décrit dans la demande de brevet EP 1 977 982 dont les étapes peuvent se résumer comme suit :
a) dégraissage de la bande transporteuse en question au niveau de la face destinée à recevoir l'impression,
b) traitement par laser excimère de ladite face de manière à en augmenter l'énergie de surface,
c) création d'une image numérique, par exemple une image en relation avec une annonce publicitaire, et son stockage sur un milieu approprié,
d) transmission de cette image numérique à un traceur ou imprimante,
e) impression de cette image sur ladite face par formation d'au moins une couche d'encre obtenue par projection de celle-ci à partir du traceur ou imprimante,
f) séchage de l'encre utilisée pour l'impression et ce, par rayonnement ultraviolet ou en présence d'oxygène selon la nature de l'encre,
g) recouvrement de ladite face au moyen d'au moins une couche de matériau ou d'un mélange de matériaux protecteurs de l'image imprimée,
h) séchage de la couche de matériaux protecteurs.

L'invention sera mieux comprise et d'autres buts, caractéristiques et avantages de celle-ci apparaîtront plus clairement au cours de la description explicative qui va suivre faite en référence aux dessins schématiques annexés donnés uniquement à titre d'exemple non limitatif illustrant un mode de réalisation de l'invention et dans lesquels :
- la figure 1 est une représentation schématique en coupe d'une bande transporteuse installée selon l'invention sur des rouleaux d'entraînement,
- la figure 2 est une représentation schématique en coupe d'une bande transporteuse fixée sur une bande support,
- la figure 3 est une représentation schématique de l'étape de revêtement dans le procédé de fabrication d'une bande transporteuse.
- les figures 4 et 6 sont des représentations schématiques en coupe d'autres modes de réalisation de l'installation d'une bande transporteuse sur une bande support,
- la figure 5 est une représentation frontale d'un autre mode de réalisation de l'installation d'une bande transporteuse sur une bande support.

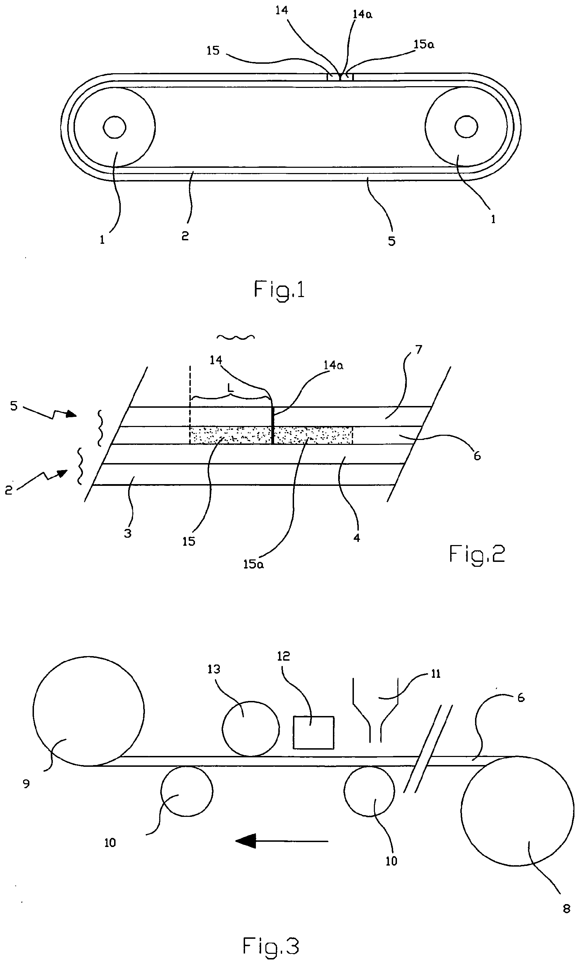

Tel que représenté à la figure 1, des rouleaux 1 capables de tourner sur leur axe sous l'action d'un dispositif quelconque d'entraînement (non visible) tel qu'un motoréducteur, soutiennent une bande support 2 sans fin qui y est posée et tendue. Celle-ci est formée, comme illustré à la figure 2, d'une feuille support 3 en tissu technique d'une longueur d'environ 3350 cm sur laquelle un revêtement 4 de chlorure de polyvinyle est appliqué de manière plane et uniforme.

La figure 1 montre également, posée sur la totalité de la bande support, une bande transporteuse 5 comprenant, comme visible à la figure 2, une feuille support 6 en tissu technique surmontée d'un revêtement 7 en polyuréthane réparti de façon plane et uniforme et supportant une impression d'images (non visibles).

Cette bande transporteuse 5 peut être fabriquée, tel que représenté à la figure 3, à partir d'une feuille support 6 se déroulant en continu en provenance d'un dévidoir 8 vers une bobine 9 d'enroulement après passage sur un ou plusieurs rouleaux support 10. Lors de son parcours, cette feuille support reçoit, par l'intermédiaire d'un injecteur 11, une quantité donnée de polyuréthane sous forme d'une pâte teintée en blanc dans la masse. Cette pâte fluidifiée par un dispositif quelconque de chauffage 12 forme une couche de polyuréthane qui est répartie uniformément par l'intermédiaire du rouleau égalisateur 13 puis refroidie à l'air libre en aval de ce rouleau.

La face destinée à constituer la face visible de la bande transporteuse 5 est alors dégraissée afin d'éliminer les salissures solides et/ou liquides notamment les résidus gras provenant de la fabrication du revêtement en polyuréthane. Cette couche subit alors un traitement par laser excimère de façon à en augmenter l'énergie de surface. Après cette opération, une image numérique créée au préalable est alors transmise par ordinateur à un traceur qui en réalise une impression par jets d'encre sur la face traitée. La couche d'encre projetée est séchée sous atmosphère contenant de l'oxygène ou par rayonnement ultraviolet et selon la nature de cette encre.

Après refroidissement de la bande transporteuse dans un courant d'air à température inférieure ou voisine de la température ambiante, une couche d'un vernis protecteur incolore est appliquée sur la couche d'encre, celle-ci étant séchée par rayonnement ultraviolet à environ 110°C à 120°C.

Comme on l'observe également aux figures 1 et 2 la bande transporteuse 5 présente deux extrémités 14, 14a juxtaposées qui définissent chacune l'un des bords de deux portions 15, 15a de la face interne de la feuille support 6. Ces portions, chacune d'une longueur L d'environ 30 mm, sont fixées par collage sur la face externe du revêtement 4 de la bande support 2.

Selon une mise en oeuvre de l'invention, l'installation de cette bande transporteuse 5 sur l'ensemble formé par la bande support 2 et les rouleaux 1 peut être entreprise au départ d'une bande transporteuse légèrement plus longue que la bande support c'est-à-dire de l'ordre de 3360 cm et qui présente deux extrémités libres.

On applique tout d'abord une couche de colle sur toute la largeur de la bande support 2 et sur une longueur d'environ 60mm. De même, on répartit ensuite de la colle sur toute la largeur de la bande transporteuse 5, d'une part sur une longueur d'environ 30 mm, équivalant à la portion 15, et d'autre part sur une longueur d'environ 80 mm située à la partie terminale opposée. Cette partie terminale contient la portion 15a d'une longueur d'environ 30 mm. La partie terminale de cette bande 5, partie terminale qui comprend la portion 15, est alors disposée longitudinalement sur la face externe de la bande support 2 et cette portion 15 est alors fixée par collage sur toute sa largeur à la bande support. La bande transporteuse de départ est ensuite complètement appliquée sur la bande support tandis que l'excédant de cette bande transporteuse est sectionné et éliminé de telle manière que l'extrémité 14 et l'extrémité 14a ainsi formée se juxtaposent parfaitement. La seconde portion située à l'extrémité 14a soit la portion 15a est alors fixée sur toute sa largeur également par collage à la bande support.

La bande transporteuse ainsi installée peut être désinstallée par chauffage des portions 15 et 15a, ce qui entraîne le décollement de celles-ci et la possibilité de désolidariser complètement la bande transporteuse d'avec la bande support.

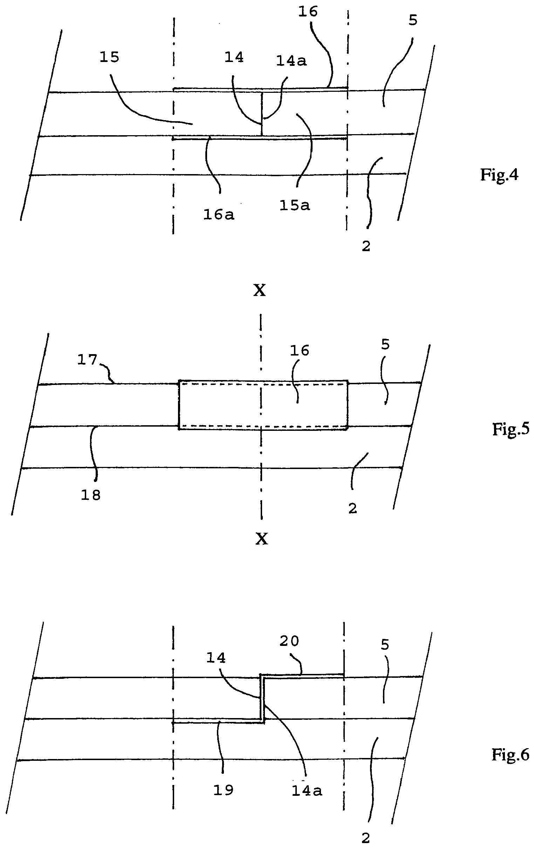

Selon un autre mode de réalisation illustré à la figure 4, la bande transporteuse 5 est posée sur une bande support 2. Cette bande transporteuse comporte deux portions 15 et 15a situées de part et d'autre des deux extrémités transversales 14,14a. Ces deux portions 15,15a sont recouvertes respectivement par les bandelettes 16 et 16a qui adhèrent à la bande transporteuse, la bandelette 16a n'adhérant pas à la bande support.

En outre, le mode de réalisation, à la figure 5, montre une bande transporteuse 5 et une bande 2 utilisée comme support de celle-ci. Cette bande transporteuse comporte deux extrémités (non visibles) situées dans l'axe X-X lesquelles sont chevauchées par une bandelette adhésive unique 16 qui recouvre à la fois une portion de la face externe 17 et une portion de la face interne 18 de cette bande. Toutefois, cette bandelette 16 n'adhère pas à la bande support.

D'autre part, la figure 6 montre un mode de réalisation de l'invention où l'ont distingue une bande transporteuse 5, une bande support 2 et une bandelette adhésive dont une première portion 19 adhère à la fois à la bande transporteuse et à la bande support, une seconde portion 20 adhérant uniquement à la bande transporteuse. On remarque en outre que cette bandelette s'insinue entre les extrémités transversales juxtaposées 14 et 14a de la bande transporteuse.

Le procédé de l'invention ainsi décrit peut être mis en oeuvre en un temps minimum ne dépassant pas généralement 45 minutes. En outre, ce procédé est d'une grande simplicité puisqu'il ne prévoit le collage que d'une portion extrêmement réduite de la bande transporteuse, collage qui, par ailleurs, peut être aisément éliminé lors de la désinstallation de cette bande.

## Revendications

1. Procédé pour l'installation et la désinstallation d'une bande transporteuse (5) sur des rouleaux d'entraînement (1) par l'intermédiaire d'une bande support (2) sans fin tendue sur ces rouleaux d'entraînement, en particulier une bande transporteuse d'un comptoir caisse, en vue d'assurer un défilement de cette bande transporteuse laquelle présente une face externe, une face interne et deux extrémités transversales libres, dans lequel:
a. pour réaliser l'installation de ladite bande transporteuse qui comprend une feuille support (6) dont une face comporte un revêtement de polyuréthane porteur d'une image imprimée lequel est recouvert d'un mélange de matériaux protecteurs de cette image, on détermine une portion (15,15a) de cette bande transporteuse à chacune de ses deux extrémités transversales (14,14a) puis cette bande transporteuse étant posée longitudinalement et tendue sur ladite bande support et lesdites deux extrémités transversales étant amenées en juxtaposition, on solidarise entre elles lesdites deux portions de bande transporteuse par fixation de celles-ci à la bande support,
b. pour réaliser la désinstallation, on désolidarise les portions de bande transporteuse et on élimine celle-ci,
**caractérisé en ce que** la fixation de la bande transporteuse à la bande support n'est opérée que sur une surface unique dont la longueur, déterminée selon l'axe longitudinal de la bande, est au maximum de 100 mm tandis que la largeur équivaut à la largeur de la bande en question.

2. Procédé selon la revendication 1, **caractérisé en ce que** la longueur de chacune des portions à fixer est d'environ 30 mm.

3. Procédé selon la revendication 1 ou 2, **caractérisé en ce que** la solidarisation entre elles des deux portions de bande transporteuse est réalisée par application d'un matériau adhésif utilisé seul ou associé à une bandelette comportant une face interne et une face externe.

4. Procédé selon la revendication 1 ou 2, **caractérisé en ce que** la solidarisation entre elles des deux portions de bande transporteuse est réalisée par application d'un matériau adhésif utilisé seul sur la face interne de chacune des deux portions de bande transporteuse et/ou sur la face externe de la bande support, de manière à fixer lesdites deux portions de bande transporteuse à la bande support.

5. Procédé selon la revendication 1 ou 2, **caractérisé en ce que** la solidarisation entre elles des deux portions de bande transporteuse est réalisée par application, d'une bandelette sur la bande support et sur la face interne de chacune de ces deux portions de bande transporteuse, cette bandelette qui chevauche ces deux portions ayant sa face interne et sa face externe recouvertes d'un matériau adhésif, de manière à fixer lesdites deux portions de bande transporteuse à la bande support.

6. Procédé selon la revendication 1 ou 2, **caractérisé en ce que** la solidarisation entre elles des deux portions (15, 15a) de bande transporteuse (5) est réalisée par application d'une bandelette (16a), dite première bandelette, sur la face interne de chacune de ces portions de bande transporteuse, cette première bandelette qui chevauche ces deux portions ayant l'une de ses faces recouverte d'un matériau adhésif et/ou par application d'une bandelette (16), dite seconde bandelette, sur la face externe de chacune de ces portions de bande transporteuse, cette seconde bandelette qui chevauche ces deux portions ayant l'une de ses faces recouverte d'un matériau adhésif, de manière à fixer entre elles lesdites deux portions de bande transporteuse.

7. Procédé selon la revendication 1 ou 2, **caractérisé en ce que** la solidarisation entre elles des deux portions de bande transporteuse (5) est réalisée par application d'une bandelette unique (16) sur la face interne et sur la face externe de chacune de ces portions, cette bandelette unique, qui chevauche ces deux portions, ayant l'une de ses faces recouverte d'un matériau adhésif, de manière à fixer entre elles lesdites deux portions de bande transporteuse.

8. Procédé selon la revendication 1 ou 2, **caractérisé en ce que** la solidarisation entre elles des deux portions de bande transporteuse (5) est réalisée par application d'une bandelette dont une première portion (19), qui comporte un matériau adhésif sur sa face interne et sur sa face externe, est disposée entre la face externe de la bande support et la face interne de la bande transporteuse et une seconde portion (20), qui comporte un matériau adhésif sur sa face interne, est disposée sur la face externe de la bande transporteuse, de manière à fixer la première portion de bandelette à la bande support et à la bande transporteuse et la seconde portion de bandelette à la bande transporteuse.

9. Procédé selon l'une des revendications 1 à 8, **caractérisé en ce que** chacune des portions est désolidarisée par décollage.

10. Procédé selon la revendication 9, **caractérisé en ce que** le décollage est opéré par chauffage.

11. Procédé selon l'une des revendications 1 à 10, **caractérisé en ce que** la bande support comprend, appliqué sur une feuille support, un revêtement de chlorure de polyvinyle qui définit la face externe de cette bande support.

12. Procédé selon l'une des revendications 1 à 11, **caractérisé en ce que** le revêtement de polyuréthane est obtenu à partir de polyuréthane sous forme de pâte déposée sur la feuille support.

13. Procédé selon l'une des revendications 1 à 12, **caractérisé en ce que** la feuille support (6) est une feuille de tissu antistatique, de feutre tissé antistatique ou de polyester.

## Patentansprüche

1. Verfahren zur Installierung und Deinstallierung eines Transportbandes (5) auf Antriebsrollen (1) mittels eines Endlos-Trägerbandes (2), das über diese Rollen gespannt ist, insbesondere ein Transportband einer Kassentheke, um ein Rollen dieses Transportbandes zu gewährleisten, welches eine äußere Seite, eine innere Seite und zwei freie quer verlaufende Enden aufweist, wobei:
a. zur Durchführung der Installation des erwähnten Transportbandes, welches eine Trägerfolie (6) umfasst, deren eine Seite eine Polyurethanbeschichtung mit einem aufgedruckten Bild umfasst, die mit einer Mischung aus dieses Bild schützenden Materialien überzogen ist, ein Abschnitt (15, 15a) dieses Transportbandes an jedem seiner beiden quer verlaufenden Enden (14, 14a) bestimmt wird, wonach, da dieses Transportband längs aufgelegt ist und auf dem erwähnten Trägerband gespannt ist und die erwähnten beiden quer verlaufenden Enden aneinander herangeführt werden, die erwähnten beiden Abschnitte des Transportbandes miteinander verbunden werden, indem diese am Trägerband befestigt werden,
b. zur Durchführung der Deinstallation die Abschnitte des Transportbandes voneinander getrennt werden und dieses abgenommen wird,
**dadurch gekennzeichnet, dass** die Befestigung des Transportbandes am Trägerband nur auf einer einzigen Oberfläche ausgeführt wird, deren Länge, bestimmt nach der Längsachse des Bandes, höchstens 100 mm beträgt, während die Breite der Breite des fraglichen Bandes entspricht.

2. Verfahren nach Anspruch 1, **dadurch gekennzeichnet, dass** die Länge jedes der zu befestigenden Abschnitte ungefähr 30 mm beträgt.

3. Verfahren nach Anspruch 1 oder 2, **dadurch gekennzeichnet, dass** die Verbindung zwischen den beiden Abschnitten des Transportbandes durch Anbringung eines Klebematerials hergestellt wird, welches allein oder in Kombination mit einem Bändchen mit einer inneren Seite und einer äußeren Seite verwendet wird.

4. Verfahren nach Anspruch 1 oder 2, **dadurch gekennzeichnet, dass** die Verbindung zwischen den beiden Abschnitten des Transportbandes durch Anbringung eines Klebematerials hergestellt wird, welches allein auf der inneren Seite jedes der beiden Abschnitte des Transportbandes und/oder auf der äußeren Seite des Trägerbandes verwendet wird, sodass die erwähnten beiden Abschnitte des Transportbandes am Trägerband befestigt werden.

5. Verfahren nach Anspruch 1 oder 2, **dadurch gekennzeichnet, dass** die Verbindung zwischen den beiden Abschnitten des Transportbandes durch Anbringung eines Bändchens am Trägerband und an der inneren Seite jedes der beiden Abschnitte des Transportbandes hergestellt wird, wobei die innere Seite und die äußere Seite dieses Bändchen, das diese beiden Abschnitte teilweise überdeckt, mit einem Klebematerial bedeckt sind, sodass die erwähnten beiden Abschnitte des Transportbandes am Trägerband befestigt werden.

6. Verfahren nach Anspruch 1 oder 2, **dadurch gekennzeichnet, dass** die Verbindung zwischen beiden Abschnitten (15, 15a) des Transportbandes (5) durch Anbringung eines Bändchens (16a), das sogenannte erste Bändchen, auf der inneren Seite jedes dieser Abschnitte des Transportbandes hergestellt wird, wobei eine der Seiten dieses ersten Bändchens, das diese beiden Abschnitte teilweise überdeckt, mit einem Klebematerial bedeckt ist, und/oder durch Anbringung eines Bändchens (16), das sogenannte zweite Bändchen, auf der äußeren Seite jedes dieser Abschnitte des Transportbandes, wobei eine der Seiten dieses zweiten Bändchens, das diese beiden Abschnitte teilweise überdeckt, mit einem Klebematerial bedeckt ist, sodass die erwähnten beiden Abschnitte des Transportbandes aneinander befestigt werden.

7. Verfahren nach Anspruch 1 oder 2, **dadurch gekennzeichnet, dass** die Verbindung zwischen den beiden Abschnitten des Transportbandes (5) durch Anbringung eines einzigen Bändchens (16) an der inneren Seite und an der äußeren Seite jedes dieser Abschnitte hergestellt wird, wobei eine der Seiten dieses einzigen Bändchens, das diese beiden Abschnitte teilweise überdeckt, mit einem Klebematerial bedeckt ist, sodass die erwähnten beiden Abschnitte des Transportbandes aneinander befestigt werden.

8. Verfahren nach Anspruch 1 oder 2, **dadurch gekennzeichnet, dass** die Verbindung zwischen den beiden Abschnitten des Transportbandes (5) durch Anbringung eines Bändchens hergestellt wird, von dem ein erster Abschnitt (19), der ein Klebematerial auf seiner inneren Seite und auf seiner äußeren Seite umfasst, zwischen der äußeren Seite des Trägerbandes und der inneren Seite des Transportbandes angeordnet ist, und ein zweiter Abschnitt (20), der ein Klebematerial auf seiner inneren Seite umfasst, auf der äußeren Seite des Transportbandes angeordnet ist, sodass der erste Abschnitt des Bändchens am Trägerband und am Transportband und der zweite Abschnitt des Bändchens am Transportband befestigt werden.

9. Verfahren nach einem der Ansprüche 1 bis 8, **dadurch gekennzeichnet, dass** jeder der Abschnitte durch Ablösung getrennt wird.

10. Verfahren nach Anspruch 9, **dadurch gekennzeichnet, dass** die Ablösung durch Erwärmen erreicht wird.

11. Verfahren nach einem der Ansprüche 1 bis 10, **dadurch gekennzeichnet, dass** das Trägerband eine Polyvinylchloridbeschichtung, aufgetragen auf einem Trägerstreifen, umfasst, die die äußere Seite dieses Trägerbandes definiert.

12. Verfahren nach einem der Ansprüche 1 bis 11, **dadurch gekennzeichnet, dass** die Polyurethanbeschichtung ausgehend von Polyurethan in Form einer Paste erreicht wird, die auf den Trägerstreifen aufgetragen ist.

13. Verfahren nach einem der Ansprüche 1 bis 12, **dadurch gekennzeichnet, dass** dieser Trägerstreifen (6) ein Streifen aus antistatischem Gewebe, antistatischem gewebtem Filz oder aus Polyester ist.

## Claims

1. Method for installing and uninstalling a conveyor belt (5) on drive rollers (1) by the intermediary of an endless support belt (2) stretched over these drive rollers, in particular a conveyor belt of a checkout counter, for the purpose of providing a scrolling of this conveyor belt which has an outer face, an inner face and two free transversal ends, wherein:
a. in order to carry out the installation of said conveyor belt which comprises a support sheet (6) of which one face comprises a polyurethane coating that bears a printed image which is covered with a mixture of materials that protect this image, a portion (15, 15a) of this conveyor belt is determined at each one of its two transversal ends (14, 14a) then this conveyor belt being positioned longitudinally and stretched over said support belt and said two transversal ends being brought in juxtaposition, said two portions of conveyor belt are fastened between them by fastening them to the support belt,
b. for carrying out the uninstallation, the portions of conveyor belt are detached and the latter is eliminated,
**characterised in that** the fastening of the conveyor belt to the support belt takes place only on a single surface of which the length, determined according to the longitudinal axis of the belt, is at most 100 mm while the width is equivalent to the width of the belt in question.

2. Method according to claim 1, **characterised in that** the length of each one of the portions to be fastened is about 30 mm.

3. Method according to claim 1 or 2, **characterised in that** the fastening between them of the two portions of conveyor belt is carried out by applying an adhesive material used alone or combined with a strip comprising an inner face and an outer face.

4. Method according to claim 1 or 2, **characterised in that** the fastening between them of the two portions of conveyor belt is carried out by applying an adhesive material used alone on the inner face of each one of the two portions of conveyor belt and/or on the outer face of the support belt, in such a way as to fasten said two portions of conveyor belt to the support belt.

5. Method according to claim 1 or 2, **characterised in that** the fastening between them of the two portions of conveyor belt is carried out by applying a strip on the support belt and on the inner face of each one of these two portions of conveyor belt, with this strip which overlaps these two portions having its inner face and its outer face covered with an adhesive material, in such a way as to fasten said two portions of conveyor belt.

6. Method according to claim 1 or 2, **characterised in that** the fastening between them of the two portions (15, 15a) of conveyor belt (5) is carried out by applying a strip (16a), referred to as the first strip, on the inner face of each one of these portions of conveyor belt, with this first strip that overlaps these two portions having one of its faces covered with an adhesive material and/or by applying a strip (16), referred to as the second strip, on the outer face of each one of these portions of conveyor belt, with this second strip that overlaps these two portions having one of its faces covered with an adhesive material, in such a way as to fasten between them said two portions of conveyor belt.

7. Method according to claim 1 or 2, **characterised in that** the fastening between them of the two portions of conveyor belt (5) is carried out by applying a single strip (16) on the inner face and on the outer face of each one of these portions, with this single strip, which overlaps these two portions, having one of its faces covered with an adhesive material, in such a way as to fasten between them said two portions of conveyor belt.

8. Method according to claim 1 or 2, **characterised in that** the fastening between them of the two portions of conveyor belt (5) is carried out by applying a strip of which a first portion (19), which comprises an adhesive material on its inner face and on its outer face, is arranged between the outer face of the support belt and the inner face of the conveyor belt and a second portion (20), which comprises an adhesive material on its inner face, is arranged on the outer face of the conveyor belt, in such a way as to fasten the first portion of strip to the support belt and to the conveyor belt and the second portion of strip to the conveyor belt.

9. Method according to one of claims 1 to 8, **characterised in that** each one of the portions is detached by ungluing.

10. Method according to claim 9, **characterised in that** the ungluing is carried out by heating.

11. Method according to one of claims 1 to 10, **characterised in that** the support belt comprises, applied on a support sheet, a polyvinyl chloride coating that defines the outer face of this support belt.

12. Method according to one of claims 1 to 11, **characterised in that** the polyurethane coating is obtained using polyurethane in the form of a paste deposited on the support sheet.

13. Method according to one of claims 1 to 12, **characterised in that** the support sheet (6) is a sheet of antistatic fabric, of antistatic woven felt or of polyester.
